# EUROPÄISCHE PATENTANMELDUNG

(11) **EP 2 600 304 A1**
(43) Veröffentlichungstag der Anmeldung: **05.06.2013**
(21) Anmeldenummer: 12008070.0
(22) Anmeldetag: 03.12.2012
(51) Int. Cl.: G06Q 50/12, G06Q 10/02, G06Q 30/04

(54) **Servicestation für eine elektronische Bewirtung oder Betreuung**

(30) Priorität: 02.12.2011 CH 19212011
(71) Anmelder: Deuber, Roger, 8800 Thalwil (CH)
(72) Erfinder: Deuber, Roger, 8800 Thalwil (CH)
(74) Vertreter: Wüstefeld, Regine Marie

(57) **Zusammenfassung**

Die Erfindung betrifft eine Servicestation für eine elektronische Bewirtung und/oder Betreuung, mit einem Gehäuse, in das ein CPU-System für die Steuerung der Servicestation integriert ist. Das Gehäuse ist mit einem RFID-Lesegerät ausgestattet, um Komponenten in der Umgebung der Servicestation erkennen zu können. Ausserdem weist es einen RFID-Transponder auf, der für die Identifizierung der Servicestation selbst dient. Für die elektronische Kommunikation mit der Umgebung, einschliesslich Internet, steht der Servicestation ein WLAN zur Verfügung, so dass sie kabellos ist. Des weiteren sind Navigations- und/oder Betätigungstasten und eine Anzeigeeinheit für den Einsatz der Servicestation bei der elektronischen Bewirtung und/oder Betreuung vorhanden. Die Servicestation ist mit einer elektronischen Menükarte und/oder sonstigen Daten und Informationen als weiteren Komponenten in der Umgebung über WLAN verbindbar oder verbunden.

Verwendet werden kann die Servicestation zur Bewirtung von Gästen oder zur Betreuung in einem Altenheim, Sanatorium, in einer betreuten Wohneinheit oder Klinik

## Beschreibung

Die Erfindung betrifft eine Servicestation für eine elektronische Bewirtung, vorzugsweise verwendet für Gäste in Restaurantbetrieben oder in Hotels, und/oder für eine elektronische Betreuung, vorzugsweise verwendet für Patienten oder ältere Menschen in einem Altenheim, einem Sanatorium, in einer betreuten Wohneinheit oder in einer Klinik. Ebenso betrifft die Erfindung ein Verfahren zur elektronischen Bestellung mit Hilfe dieser Servicestation.

Es ist inzwischen bekannt, in Restaurants über eine elektronische Menükarte das gewünschte Essen, eventuell auch die gewünschte Portionsgrösse, auszusuchen und auch gleich direkt über die Menükarte zu bestellen. Dabei können diese elektronischen Menükarten über eine direkte Verkabelung mit dem Rechnersystem des jeweiligen Restaurants verbunden sein. Bei dieser Lösung hat es sich immer wieder gezeigt, dass bei der praktischen Umsetzung in den Restaurants die Kabellänge bei der Verbindung der Menükarten zu den Rechner-Schnittstellen nicht optimal für die Belange des Bestellens und Auswählens geeignet ist, und es hat sich als schwierig herausgestellt, die optimale Länge zu bestimmen.

Bei einer anderen, bereits bekannten Variante der elektronisch-basierten Bewirtung bestellt ein Gast mit Hilfe eines elektronischen Puks, der etwa die Grösse eines Handys aufweist, an einem Touchscreen-Bildschirm das oder die gewünschten Gerichte. Diese Bestellung gelangt dann auf elektronischem Weg in die Küche des Restaurants. Von den genannten Touchscreen-Bildschirmen sind in der Regel mehrere aufgestellt, z. B. fünfzehn Touchscreen-Bildschirme bei einer üblichen Restaurantgrösse. Auf diese Weise entfällt das Problem der geeigneten Kabellänge von der jeweiligen Menükarte zu der Rechner-Schnittstelle. Wenn der Gast nach seiner Bestellung an einem geeigneten Ort in dem Restaurant Platz genommen hat, wird ihm mittels des genannten Puks signalisiert, dass sein Essen fertig und somit abholbereit ist. Das Abholen obliegt ihm selbst.

Auf diese Weise entfällt das technische Problem, den Gast mit seiner Bestellung an einem definierten Ort in dem Restaurant zu lokalisieren, um ihm dann das Essen zu servieren. Es entfällt des weiteren Personalaufwand, was sich günstig auf den Preis des Essens auswirkt. Grundsätzlich ist aufgrund der geschilderten Abläufe insbesondere gewährleistet, dass der Gast, z.B. ein Büroangestellter in seiner kurz bemessenen Mittagspause, schnell und unkompliziert sein gewünschtes Essen erhält. Allerdings entfällt der Komfort einer entspannten Bestellung an einem ausgesuchten Platz und es kann zu Engpässen kommen, wenn bei einem grösseren Andrang in dem Restaurant alle Touchscreen-Bildschirme belegt sind.

Gemäss noch einer weiteren bekannten Variante einer elektronischen Bewirtung erhält der Gast bei seinem Eintritt in das Restaurant eine Chipkarte, auf welcher seine Bestellungen erfasst werden. Auch bei dieser Variante werden die Gerichte und zusätzlich auch die Getränke an verschiedenen Stationen einer Theke ausgewählt, wenn möglich sofort vor den Augen des Gastes zubereitet, so dass er sie auf einem Tablett selbst mitnehmen kann. Bei längeren Zubereitungszeiten erhält der Gast einen elektronischen Funkmelder mit an seinen Platz. Sobald die Speise fertig ist, gibt der Funkmelder Alarm, so dass der Gast nun sein fertiges Gericht abholen kann. Die Chipkarte dient auch dazu, dass der Gast seine Rechnung über das Essen und die Getränke beim Verlassen des Lokals an einer Kasse zahlen kann.

Auch bei dieser Variante wird somit das Problem der elektronischen Vernetzung an jeweils einem ausgewählten Tisch oder Tischbereich in dem Restaurant zugunsten einer den Komfort verringernden Selbstbedienung umgangen.

Demgegenüber ist durch die WO 2009/036582 ein elektronisches Bestellsystem für Restaurantbetriebe bekanntgeworden, das eine elektronische Speisekarte am Platz des jeweiligen Gastes vorsieht, wobei der Gast an seinem Platz ein Menü auswählen kann, das dann über die EDV an einen Zubereitungsort übertragen wird. Die Eingabe der Daten durch den Gast kann über ein Touchscreen oder ein Touchpanel erfolgen. Die EDV ist mit lokalen und externen Datenbanken verbunden, welche das Zuordnen der bestellten Speisen und das Verknüpfen mit dem jeweiligen Serviceort als Platz des Gastes erleichtert. Zusätzlich kann hier vorgesehen sein, dass über dieses elektronische Bestellsystem auch ausserhalb des Restaurants Einkäufe durch ein elektronisches Bestellen möglich sind und die bestellten Produkte zunächst in einem sogenannten Abholfach deponiert werden, aus dem erst dann die Freigabe erfolgt, wenn eine vorgegebene Kennung eingegeben wurde. Diese kann von der Bezahlung der bestellten Waren abhängig gemacht werden. Zur Bezahlung kann ein Kreditkartenleser das elektronische Bestellsystem ergänzen und dieser kann mit der elektronischen Speisekarte fest verbunden sein.

Die gemäss der WO 2009/036582 offenbarte elektronische Speisekarte kommuniziert mit der Umgebung über WLAN oder in anderer bekannter Weise. Sie weist dazu eine Anzeigeeinrichtung und Eingabemittel sowie einen RFID-Tag auf, über den die elektronische Speisekarte identifizierbar ist. Über die Eingabemittel, z.B. in Form des schon genannten Touchscreens, die sich an der Menükarte selbst befinden, kann eine Menüzusammenstellung erfolgen. Diese kann dann mittels einer Datenübertragungsvorrichtung der Speisekarte an eine zentrale Datenverarbeitungsvorrichtung weitergeleitet werden. Nun ist es gemäss dem Bestellsystem, wie es die WO/CH2008/000358 offenbart, erforderlich, die Bestellung in Form des dafür generierten Datensatzes mit dem Ort zu verknüpfen, an dem die Auslieferung der bestellten Speisen und/oder Getränke erfolgen soll, d.h. eine Verknüpfung mit dem Serviceort, herzustellen. Dazu muss in der zentralen Datenverarbeitungsvorrichtung die Menükonfiguration mit der Information über den Serviceort extra zusammengeführt werden. Dies geschieht über den RFID-Tag der Speisekarte. Des weiteren ist es noch erforderlich, dass der Serviceort selbst ein RFID-Lesegerät aufweist, und dass nach abgeschlossener Menükonfiguration der RFID-Tag der Speisekarte in einen begrenzten Empfangsbereich des RFID-Lesegeräts an dem Serviceort gebracht wird. Erst dadurch wird die Bestellung wirksam ausgelöst. Umständlich ist hier, dass z.B. zur Vermeidung von Fehlbuchungen die Empfindlichkeit des RFID-Lesegeräts genau auf den Transponder des RFID-Tags der jeweiligen Speisekarte abgestimmt sein muss, so dass eine Bestellung lediglich in einem Nahfeld von bis zu maximal etwa 10 cm um das Lesegerät herum zustandekommt.

Das so beschriebene elektronische Bestellsystem hat sich zwar grundsätzlich in der Praxis bewährt, bei seinem praktischen Einsatz aber auch Verbesserungs- wie Erweiterungsmöglichkeiten deutlich gemacht.

Ausgehend von diesem Stand der Technik lag der vorliegenden Erfindung daher die Aufgabe zugrunde, eine Vorrichtung für eine elektronische Bewirtung bereitzustellen, welche nicht nur die Bewirtung eines Gastes an seinem Platz möglich macht, sondern in Erweiterung auch die Betreuung einer Person und über die Bestellung eines Essens und der Getränke hinausgehende Servicefunktionen problemlos ermöglicht, insbesondere eine im wesentlichen störungsfreie Kommunikation mit einem bedienenden/betreuenden Servicepersonal gewährleistet sowie insgesamt die Handhabung sowie die Servicefunktionen gegenüber dem elektronischen Bestellsystem gemäss der WO 2009/036582 verbessert und erweitert.

Gelöst wird diese Aufgabe durch eine Servicestation für eine elektronische Bewirtung und/oder Betreuung, mit einem Gehäuse, das ein integriertes CPU-System für die Steuerung der Servicestation aufweist und mit einem RFID-Lesegerät ausgestattet ist, für die Erkennung von Komponenten in der Umgebung der Servicestation, sowie mit einem RFID-Transponder, für die Identifizierung der Servicestation selbst, wobei die Servicestation ein WLAN aufweist, für die elektronische Kommunikation mit der Umgebung, einschliesslich des Internets, so dass sie kabellos ist, und über Navigations- und/oder Betätigungstasten verfügt, für den Einsatz der Servicestation im Rahmen der elektronischen Bewirtung und/oder Betreuung, sowie einer Anzeigeeinheit, und wobei die Servicestation mit einer elektronischen Menükarte und/oder sonstigen Daten und Informationen als weiteren Komponenten in der Umgebung über WLAN verbindbar oder verbunden ist.

Mit dieser erfindungsgemässen Servicestation steht im Rahmen der elektronischen Bewirtung und/oder Betreuung erstmals eine Komponente zur Verfügung, welche als eine unauffällige, aber sehr effektive Schnittstelle für die Bewirtung und/oder Betreuung in elektronischer Form dient. Die Bewirtung und/oder Betreuung kann auf diese Weise schneller, effizienter und kostensparend erfolgen. Damit die vielfältigen Aufgaben der Komponenten der Servicestation reibungslos erfüllt werden können, ist in die Vorrichtung ein CPU-System integriert, das alle vorhandenen Komponenten steuert.

Das RFID-Lesegerät als eine der Komponenten der erfindungsgemässen Servicestation ermöglicht den Kontakt zu den weiteren Komponenten, welche für den Ablauf einer elektronischen Bewirtung und/oder Betreuung erforderlich sind. Als eine dieser Komponenten ist z. B. bei der Bewirtung in einem Restaurant ein Teller zu nennen, der speziell für den Tisch vorgesehen ist, zu welchem die erfindungsgemässe Servicestation gehört. Ausserdem kann das RFID-Lesegerät dazu verwendet werden, die ebenfalls elektronische Menükarte zu identifizieren, welche von den Personen an dem jeweils ausgewählten Tisch oder, bei grösseren Speisetafeln, in dem Tischbereich über die Servicestation aufgerufen werden kann. Eine Zuordnung der anhand der aufgerufenen Menükarte erfolgten Bestellung zu dem Ort, an den die bestellten Speisen und Getränke gebracht werden sollen, ist somit ohne weiteres möglich. Bei grösseren Speisetafeln, z.B. langen Tischen für Konferenzen und Feiern, kann vorgesehen sein, dass pro Tafel mehr als eine der erfindungsgemässen Servicestationen die Koordinierung der elektronischen Bewirtung, einschliesslich der Bestellung der Speisen und Getränke, vornimmt. Die Auflistung der Komponenten ist dabei exemplarisch und somit nicht abschliessend zu sehen und kann vielfältig erweitert werden.

Damit unterscheidet sich die erfindungsgemässe Servicestation von dem elektronischen Bestellsystem für Restaurantbetriebe, wie es durch die WO 2009/036582 offenbart worden ist. Die Funktionen der Menükarte werden zentral der Servicestation zugewiesen, welche fest an einem Platz oder einem Platzbereich deponiert ist und ihrerseits in Wechselwirkung mit einer beliebigen elektronischen Menükarte treten kann.

Mit der erfindungsgemässen Servicestation kann auf diese Weise die Bestellung, einschliesslich der Identifikation des Serviceortes, vereinfacht werden, und es kann gleichzeitig eine Erweiterung der Funktion der Servicestation zur Koordinierung vielfältiger Dienstleistungen erfolgen. Durch den Einsatz einer solchen, erfindungsgemäss ausgestalteten Servicestation wird es nun ebenso möglich, die Servicestation auch zur Betreuung von Personen in einer Weise einzusetzen, die deren Lebensqualität deutlich erhöht. Die Servicestation ist nicht nur Medium für eine Bestellung sondern gleichzeitig "Infopoint", d.h. Informationszentrale, im weitesten Sinne.

In der erfindungsgemässen Servicestation für eine elektronische Bewirtung und/oder Betreuung kann ein Akku für den autonomen Betrieb integriert sein. Dann muss kein störendes Kabel für die Stromversorgung vorgesehen werden. Neben der ästhetischen Komponente eines auf diese Weise vermiedenen Kabelwirrwars ist auch die auf diese Weise erreichte örtliche Unabhängigkeit und die betriebliche Sicherheit vorteilhaft. Die Stromversorgung ist nicht mehr von der Kabellänge und der Erreichbarkeit einer Steckdose abhängig, und eine Unfallgefahr durch ein verlegtes Stromkabel entfällt.

Um keine die Flexibilität und/oder Betriebssicherheit der Servicestation störende Kabel zu benötigen, kann zusätzlich vorgesehen sein, dass eine drahtlose Aufladung des Akkus über eine Wireless Power-Einheit in die Servicestation integriert ist.

Gemäss einer weiteren Ausführungsform kann die Servicestation für eine elektronische Bewirtung und/oder Betreuung eine Zustandsanzeige mit vorzugsweise mehrfarbigen LEDs aufweisen. Dadurch werden Überblick und Bedienung noch einfacher.

Das Gehäuse der Servicestation für eine elektronische Bewirtung und/oder Betreuung kann grundsätzlich in einer beliebigen Form ausgebildet sein. Wesentlich ist lediglich, dass alle für den Betrieb der Servicestation notwendigen Bestandteile in das Gehäuse der Servicestation integrierbar sind. Vorzugsweise ist die Servicestation, d.h. ihr Gehäuse, in runder, ovaler, viereckiger oder vieleckiger Form ausgebildet und weist Navigations- und Betätigungstasten auf.

Bei einer runden Form hat die Gestaltung des Gehäuses der Servicestation im wesentlichen die Form eines Bierdeckels, welche sich den üblichen Gegebenheiten in einem Restaurant anschliesst und aufgrund der Form auch für die Pflege, Rekonvaleszenz und Betreuung von Vorteil ist.

Gemäss einer weiteren Ausführungsform kann die Servicestation einen Chip für die verbindungslose Datenübertragung mittels "Bluetooth"® aufweisen, vorzugsweise den Standard "Bluetooth V3.0" ® oder das Protokoll "Bluetooth V4.0 Low Energy"®.

Ausserdem kann die Servicestation für eine elektronische Bewirtung und/oder Betreuung mit einem RFID-Transponder für die geldlose Bezahlung korrespondieren. Der RFID-Transponder für die geldlose Bezahlung kann in Form einer Kreditkarte ausgebildet sein.

Die Erfindung betrifft auch die Verwendung der Servicestation, wie sie zuvor beschrieben worden ist, zur Bewirtung von Gästen in einem Restaurant oder in einem Hotel.

Sie betrifft ebenso die Verwendung der beschriebenen Servicestation zur Betreuung von Patienten und älteren Menschen in einem Altenheim, einem Sanatorium, in einer betreuten Wohneinheit oder in einer Klinik.

Des weiteren betrifft die Erfindung ein Verfahren zur elektronische Bewirtung und/oder Betreuung von Personen, bei dem die Person durch die Vermittlung über einen Host über eine mittels eines RFID-Transponders identifizierbare Servicestation in Form eines Gehäuses, welches ausserdem über ein RFID-Lesegerät Komponenten in der Umgebung der Servicestation erkennt, über ein WLAN in eine elektronische Kommunikation mit der Umgebung, einschliesslich des Internets und/oder eines Menüprofilersystems, tritt, und über eine Anzeigeeinheit sowie Navigations- und/oder Betätigungstasten eine elektronische Bestellung aufgibt und/oder einen Auftrag erteilt, wobei die Servicestation alle sich aus der Interaktion der Person ergebenden Daten und Informationen speichert oder an eine Speichereinheit sendet und für die Person einsehbar und verfügbar macht.

Gemäss einer weiteren Ausgestaltung des Verfahrens kann die Person über die WLAN-Verbindung auf das Internet zugreifen, wobei mit dem die Servicestation zur Verfügung stellenden Host dritte Anbieter verbunden sind. Dadurch kann die Person die Dienstleistungen der dritten Anbieter oder des dritten Anbieters über eine elektronische Kommunikation in Anspruch nehmen, wobei alle für das Internetgeschäft erforderlichen Informationen über die Servicestation verfügbar gemacht werden.

Unter dem die Servicestation zur Verfügung stellenden Host kann Verschiedenes verstanden werden. Im Fall eines Restaurantbetriebes, welcher die Servicestation als Mittel für die elektronische Kommunikation mit dem Gast einsetzt, über welche der Gast bestellen und sich allgemein mit dem Restaurantbetreiber in Verbindung setzen kann, stellt dieser Restaurantbetreiber den Host dar. Dieser Host wird dann als Schnittstelle zu den Dienstleistungen und Angeboten dienen, welche er dem Gast als Restaurantbesucher zur Verfügung stellt.

Im Fall eines Altenheims stellt die jeweilige Institution, welche das Altenheim betreibt, als Host alle Schnittstellen nach aussen zur Verfügung, d.h. wie schon im Fall des Restaurants solche, die zu dritten Anbietern führen als auch solche, welche sich der Datenwolke des Internets bedienen.

Bei einem Sanatorium, in einer betreuten Wohneinheit oder im Fall einer Klinik gilt dann entsprechendes. Die jeweils verantwortlichen Betreiber der Institutionen sind jeweils auch als die verantwortlichen Hosts anzusehen, sofern sie dies nicht weiter auf Dritte übertragen.

In einer weiteren Ausgestaltung des erfindungsgemässen Verfahrens, steht der bewirteten oder betreuten Person zusätzlich zu der Servicestation eine Zahlkarte zur Verfügung. Diese wird über einen RFID-Tag identifiziert. Die jeweilige Person kann bestellte Waren und/oder Dienstleistungen damit bezahlen und die Servicestation bestätigt über eine Zustandsanzeige die erfolgte Zahlung.

Ausserdem kann die Servicestation mit einem Ablagefach zusammenwirken, wobei das Ablagefach zunächst elektronisch gesperrt wird und seine Freigabe erst nach einer elektronischen Zahlung von bestellten und bezahlten Waren über ein elektronisches Signal erfolgt.

Auf diese Weise ist einerseits gesichert, dass die Ware nicht ohne ein ordnungsgemässes Bezahlen entfernt werden kann. Es ist aber auch sichergestellt, dass die Ware nicht von unbefugten Dritten entnommen wird, da dass Ablagefach über den RFID-Tag identifiziert wird, welcher dem bestellenden Gast zugeordet ist. Nur ihm wird es ermöglicht, das Fach nach der ordnungsgemässen Zahlung zu öffnen.

Gemäss noch einer Variante des erfindungsgemässen Verfahrens zur elektronischen Bewirtung und/oder Betreuung von Personen wirkt die Servicestation mit einer Bluetooth ®-Version zusammen und stellt diese entsprechend als Host zur Verfügung, so dass die bewirtete oder betreute Person über Bluetooth® Musik hören und/oder telefonieren kann.

Vorzugsweise stellt die Servicestation bzw. der Host, welcher die jeweilige Servicestation bereithält, die über sie erreichbaren Informationen und Daten durch "Streaming" aus der Datenwolke des Internet zur Verfügung.

Im folgenden soll die Erfindung anhand von Ausführungsbeispielen in Verbindung mit den Fig. der Zeichnung näher erläutert werden.

Es zeigen:
- Fig. 1:: Eine Aufsicht auf eine erfindungsgemässe Servicestation mit einem Gehäuse in Bierdeckelformat, und
- Fig. 2:: eine Aufsicht nach Fig. 1 mit abgenommenem Gehäusedeckel.

### Beispiel 1:

### I. Servicestation für eine elektronische Bewirtung in Form eines runden Bierdeckels

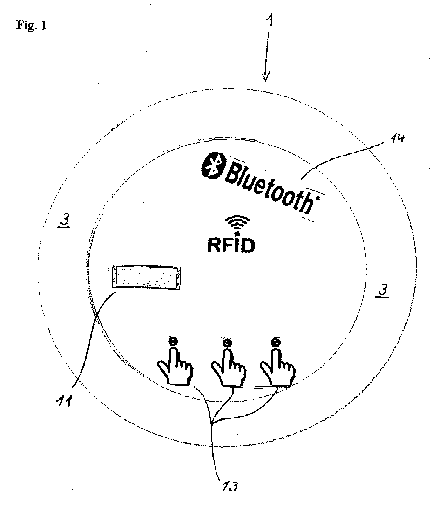

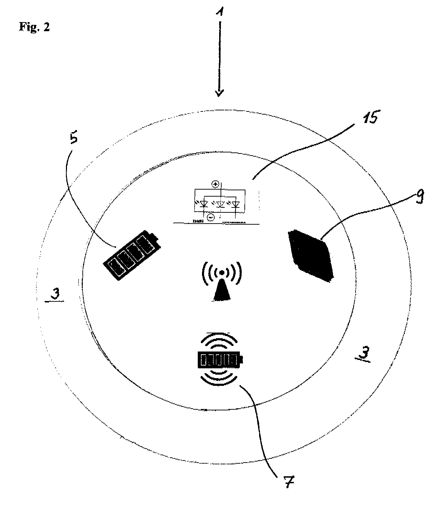

Die erfindungsgemässe, insgesamt mit der Bezugsziffer 1 bezeichnete Servicestation, wie sie die Fig. 1 und 2 zeigen, ist in diesem Ausführungsbeispiel im wesentlichen scheibenförmig ausgebildet. D.h. sie besteht in diesem Ausführungsbeispiel aus einem flachen, rund ausgebildeten Gehäuse 3, welches dadurch im wesentlichen mit einem üblichen Bierdeckel vergleichbar ist. Diese Formgebung hat den Vorteil, dass sich die Servicestation 1 einer üblichen und gewohnten Ausstattung eines Restaurantbetriebes anpasst. Sie ist weder auffällig noch störend. Neben dieser runden Form ist aber genauso eine ovale Gestaltung oder eine andere Formgebung möglich.

In dem Gehäuse 3 befindet sich ein Akku 5, der aus Fig. 2 ersichtlich ist und der die Stromversorgung gewährleistet, so dass ein völlig autonomer Betrieb der Servicestation 1 möglich ist. Es muss kein Kabel für die Stromversorgung vorgesehen werden. Damit entfällt auch das Problem einer ausreichenden Länge eines solchen Kabels und die Vorrichtung kann in dem Restaurant unabhängig von einer Steckdose dort abgelegt werden, wo es sinnvoll und notwendig bzw. gewünscht ist. Eine "Wireless Power-Einheit" 7, d.h. eine kabellose Stromversorgung, sorgt für ein kontaktloses und damit ebenfalls kabelloses Aufladen des Akkus 5. Diese "Wireless Power-Einheit" 7 ist ebenfalls in dem Gehäuse 3 untergebracht.

Um die Servicestation 1 vollständig von Kabelverbindungen unabhängig zu machen, kommuniziert sie mit anderen elektronischen Medien über ein drahtloses lokales Netzwerk in Form eines lokalen Funknetzes, bei dem es international üblich ist, dieses als "Wireless LAN" oder "WLAN" zu bezeichnen.

Die Servicestation 1 verfügt ebenso über einen in dem Gehäuse untergebrachten Prozessor, d.h. eine CPU (central processing unit) 9, als zentrale Verarbeitungseinheit der Servicestation 1.

Um die Servicestation 1 orten und identifizieren zu können, ist sie mit einem RFID-Tag, d.h. einem Transponder, versehen, der sich an der Unterseite des Gehäuses 3 befindet und daher aus den Fig. nicht näher ersichtlich ist. RFID bezeichnet dabei eine berührungslose Identifizierung von Gegenständen und Personen über Radiowellen und bedeutet "Radio Frequency Identification". Neben der berührungslosen Identifizierung und Lokalisierung von Gegenständen bzw. Personen ist über die RFID-Technik auch eine automatische Erfassung und Speicherung von Daten möglich. Im Rahmen der vorliegenden Erfindung wird die RFID-Technik in dieser erweiterten Hinsicht verstanden. Dabei wird als bekannt vorausgesetzt, dass bei der Verwendung der RFID-Technik grundsätzlich ein als RFID-Tag bezeichneter Transponder, der den Gegenstand, an dem der Tag angebracht ist, kennzeichnet, ein Lesegerät zum Auslesen der Transponder-Kennung und eine (international so bezeichnete) "RFID-Middleware" umfasst, welche Schnittstellen zu weiterer EDV und/oder zu Datenbanken aufweist.

Die Funktion des RFID-Tags in dem Restaurantbetrieb wird im folgenden noch näher erläutert.

Die erfindungsgemässe Servicestation 1 ermöglicht die Kommunikation und Interaktion in und mit einem Restaurantbetrieb schnell und effizient auf elektronische Weise. Über den RFID-Tag kann die Serviceeinheit 1 eindeutig einem Platz, einem Tisch oder einem Tischbereich in dem Restaurant zugeordnet werden. Der an dem Platz befindliche Gast oder die an dem Tisch bzw. in dem Tischbereich befindliche Gruppe von Gästen, welche Dienstleistungen des Restaurants in Anspruch nehmen wollen, werden über die Serviceeinheit 1 lokalisierbar und somit erreichbar.

Jeder Gast kann seinerseits über die Servicestation 1 mit dem Restaurantbetrieb kommunizieren. Um dies zu ermöglichen, weist die Vorrichtung eine Anzeigeeinheit 11 auf, wie in Fig. 1 exemplarisch dargestellt.

Über diese Anzeigeeinheit 11 kann sich der Gast alle Informationen über die Eingabemöglichkeiten und den Zustand der Eingabemöglichkeiten verschaffen. Er kann z.B. den Service des Restaurantbetriebes aufrufen oder bezahlen, und er kann sich die notwendigen Informationen über den Zustand der Eingabemöglichkeiten verschaffen. Navigations- und Betätigungstasten 13 unterstützen den Gast dabei.

Alternativ kann die Anzeigeeinheit 13 auch als Touchscreen ausgebildet sein, so dass sie durch Antippen reagiert.

Durch das integrierte WLAN-System kann der Gast beliebig mit einem Menüprofilersystem und dem Internet kommunizieren. Über das Menüprofilersystem kann er eine Menükarte aufrufen, Speisen und Getränke auswählen, indem er sich ein zu bestellendes Menü selbst zusammenstellt oder einem vorgegebenen Menüvorschlag folgt und die Bestellung über die Serviceeinheit 1 elektronisch aufgibt. Diese Bestellung kann über die Kennung der Serviceeinheit 1 über den RFID-Tag eindeutig einem Platz, einem Tisch oder einem Tischbereich und damit dem sich dort befindlichen, bestellenden Gast zugeordnet werden.

Bei Auslieferung der gewünschten Speisen und Getränke ortet das Servicepersonal den zu der Bestellung gehörenden Platz über den RFID-Tag und identifiziert auf diese Weise auch den Gast, dem die bestellten Speisen und Getränke zu bringen sind.

Der sich für die konsumierten Speisen und Getränke ergebende Rechnungsbetrag wird automatisch in der Vorrichtung gespeichert, steht dem Gast jederzeit aktuell abrufbar zur Verfügung und ist gleichzeitig in einer weiteren Serviceeinheit des Restaurants, z.B. der Küche und/oder einem gesondert für die Abrechnung zuständigen Bereich gespeichert und abrufbar.

Abwandlungen der beschriebenen Servicestation für eine elektronische Bewirtung in Form eines runden Bierdeckels sind möglich, ohne die wesentlichen Grundsätze der Erfindung zu verlassen. So ist es z.B. nicht erforderlich, dass die Speisekarte, aus welcher der Gast seine Speise(n) und/und Getränke bzw. sein Getränk auswählt, in elektronischer Form vorliegt. Insbesondere bei Speisekarten mit einem weniger umfangreichen Angebot kann diese genauso in bisher zumeist noch üblicher Papierform vorliegen.

Die Verarbeitung der Bestellung des Gastes kann dann auf verschiedene Weise erfolgen. Zunächst kann der Gast gemäss einer Variante über die Servicestation eine Bedienung rufen. Diese ordnet den Platz dieses Gastes über den RFID-tag der Servicestation am Platz des Gastes eindeutig zu und nimmt die Bestellung vor Ort mündlich entgegen. Die Bestellung kann dann z.B. durch ein entsprechendes, von der Bedienung bereitgehaltenes Gerät elektronisch weitergegeben werden. Hier kann beispielsweise auf die neuere Technik der iPhones, iPads und dergleichen zurückgegriffen werden. Eine schnelle Aufnahme der Bestellung kann durch entsprechende shortcuts sichergestellt werden. Dabei sind diese shortcuts in einem erweiterten Begriffsverständnis zu sehen, d.h. es geht nicht nur darum, allgemeine Bedienungserleichterungen über einen solchen shortcut aufzurufen bzw. durchzuführen. Es geht insbesondere darum, über einen shortcut Funktionen schnell aufrufbar zur Hand zu haben. So können z.B. Links zu weiteren Informationen vorbereitet sein, beispielsweise zu ausgewählten Websites. Speziell für die vorliegende Anwendung hat es sich im Zusammenhang mit der Aufnahme von mündlichen Bestellungen als sehr sinnvoll erwiesen, dass das aufnehmende Personal an seinem eigenen Gerät über einen entsprechend programmierten shortcut schnell die elektronische Speisekarte aufrufen und dort über einen touchscreen die Bestellung orten und weitergeben zu können.

Gemäss einer weiteren Variante hat der Gast aber auch selbst die Möglichkeit, seine Bestellung in elektronischer Form weiterzuleiten. Dazu steht ihm die erfindungsgemässe Servicestation zur Verfügung. Mittels des RFID-tags der als "infopoint" arbeitenden Servicestation kann er einen RFID-scan der Textstelle in der Speisekarte vor ihm ausführen, welche der ausgesuchten Speise und/oder dem Getränk bzw. den Getränken entspricht. Um Fehler und Missverständnisse bei der Übertragung möglichst auszuschliessen, ist bei dieser Variante vorsorglich vorgesehen, dass der Gast seine Bestellung dann über die Servicestation noch einmal kontrolliert und bestätigt.

### II. Servicestation für eine elektronische Bewirtung mit erweiterter Funktion

Grundlage für die gemäss diesem Ausführungsbeispiel zu erläuternde Servicestation 1 ist die im Ausführungsbeispiel I. beschriebene Servicestation 1 in Form eines Bierdeckels. Insofern wird auf die Ausführungen in dem ersten Ausführungsbeispiel vollumfänglich verwiesen.

Gemäss diesem Ausführungsbeispiel wird die Servicestation 1 in ihren Servicemöglichkeiten gegenüber dem Gast dahingehend erweitert, dass diesem über die WLAN-Verbindung ein Internetzugang zur Verfügung steht. Dadurch kann dem Gast ein besonderer Service zur Verfügung gestellt werden, der nachfolgend erläutert wird.

Das Restaurant hat gemäss dieser erweiterten Variante einer Servicestation ein beliebig erweiterbares Netzwerk zu externen Anbietern von Waren aufgebaut. Mit diesen Anbietern kann nun der Gast des Restaurantbetriebes über das Internet kommunizieren und Waren zum sofortigen Einkauf bestellen. Diese werden dann zu dem Restaurantbetrieb gebracht und für den Gast geeignet deponiert.

Die externen Anbieter können Kaufhäuser aller Art sein, sofern diese in der Lage sind, eine elektronische Verbindung zu dem Restaurantbetrieb zu ermöglichen, so dass dem Gast ein elektronisches Auswählen und Bestellen von Waren möglich ist.

Zur Absicherung der Interessen des jeweiligen online-Anbieters von Waren kann der bestellende Gast diese erst dann in Empfang nehmen, wenn sie bezahlt worden sind. Auch diese Information ist über die Servicestation abrufbar.

Zur Bezahlung steht dem Gast eine weitere Variante der Servicestation in Form einer Ergänzung zur Verfügung, die nachfolgend erläutert wird.

### II.a. Serviceeinheit für eine elektronische Bewirtung mit Zahlfunktion und erweiterten Dienstleistungen

Die weiter oben erläuterte Serviceeinheit 1 kann gemäss dieser Modifikation der bisherigen Ausführungsbeispiele mit einem weiteren RFID-Tag in Kredit- bzw. Scheckkartenformat zur Bezahlung zusammenwirken. Dieser Vorgang ist an sich bereits als sogenanntes "E-PURSE" bekannt, so dass er selbst nicht näher erläutert werden muss.

Der Gast eines Restaurantbetriebes hat nun grundsätzlich die Möglichkeit, sein Menü, einschliesslich der Getränke, mittels dieser Karte zur Bezahlung zu verwenden. Wenn der Gast zusätzlich via Internet Waren geordert hat, die für ihn in dem Restaurantbetrieb abgelegt worden sind, erhält er diese erst, wenn er sie mittels der genannten Zahlkarte bezahlt hat. Bis dahin bleiben sie in einem für den jeweiligen Gast eingerichteten Fach gesperrt. Auf diese Weise wird einem Missbrauch vorgebeugt.

Über diese Karte hat er aber auch die Möglichkeit, weitere Serviceangebote des Restaurantbetriebes in Anspruch zunehmen. So kann er über die Karte mit einer dazugehörigen Platzidentifizierung eine Platzreservierung vornehmen.

### II.b. Serviceeinheit für eine elektronische Bewirtung mit zusätzlichen Dienstleistungen

Für die gemäss diesem Ausführungsbeispiel zu erläuternde Variante der Servicestation 1 wird wieder Bezug genommen auf die im Ausführungsbeispiel I. beschriebene Servicestation 1 in Form eines Bierdeckels. Insofern kann auch hier auf die Ausführungen in dem ersten Ausführungsbeispiel verwiesen werden. Zusätzlich zu den nachfolgend noch erläuterten Funktionen dieser Variante kann die Serviceeinheit 1 genauso die erweiterten Servicemöglichkeiten gegenüber dem Gast aufweisen, wie sie in dem Ausführungsbeispiel **II.a.** in bezug auf den durch die WLAN-Verbindung ermöglichten Internetzugang erläutert worden sind. Für die besonderen Servicemöglichkeiten, welche dadurch dem Gast zur Verfügung gestellt werden können, wird auf die Ausführungen unter **II.a.** verwiesen. Hier soll nur die davon grundsätzlich unabhängige, aber gleichzeitig in Anspruch nehmbare zusätzliche Dienstleistung dieser Variante **II.b.** erläutert werden.

Diese zusätzliche Dienstleistung betrifft optionale Erweiterungen, welche sich grundsätzlich durch den Betrieb und das Zur-Verfügung-Stellen von "Bluetooth"® (Marke der Bluetooth Special Interset Group (SiG)) ergeben. Dabei werden die Grundlagen der auf diese Weise bezeichneten verbindungslosen Datenübertragung zwischen Geräten über eine kurze Entfernung mittels Funk in sogenannten "WPAN"-Netzen gemäss dem Industriestandard IEEE 802.15.1 als grundsätzlich bekannt vorausgesetzt. Auch hier ist wieder auf den grossen Vorteil dieser Technik im Hinblick auf den Restaurantbetrieb hinzuweisen, welche den grundsätzlichen Wegfall von Kabelverbindungen betrifft.

Bevorzugt wird in die bierdeckelartige Serviceeinheit 1 ein Chip integriert, der zumindest der Spezifikation 4.0 entspricht, damit den Protokollstapel "Low Energy" und die neuen Profile zu "Low Energy" verfügbar macht. Dabei bezeichnet der Begriff "Protokollstapel" gemäss der englischen Bezeichnung "protocol stack" Protokolle in hierarchischer Ordnung, die die gewünschten interaktiven Dienste und Anwendungen ermöglichen, welche über mobile Funkverbindungen kommunizieren und mittels Funkmodulen bereitgestellt werden.

Durch den Einsatz von "Bluetooth® Low Energy" kann eine Übertragung per Funk innerhalb von weniger als fünf Millisekunden aufgebaut und über eine Entfernung von bis zu 100 Metern aufrechterhalten werden. Aussderdem kann über den Einsatz von "Bluetooth® Low Energy" eine deutlich kürzere Aufbauzeit der Übertragung erreicht werden, neben dem Vorteil eines geringeren Stromverbrauchs.

"Bluetooth® low energy" ist dabei nicht mit einem Energiesparmodus zu verwechseln. Sein Protokollstapel unterscheidet sich vielmehr von den davor bekannten Protokollstapeln in der Weise, dass er neue Optionen für einen geringeren Energieverbrauch eröffnet. Der Standard 4.0 ist dabei abwärtskompatibel zu allen Vorgängerversionen aufgebaut.

Bei Testversionen der Serviceeinheit 1 wurden sowohl ein Chip eingesetzt, der eine maximale Leistung von 2,5 mW ermöglichte, welche einer maximalen Leistung von 4dBm entspricht, mit einer Reichweite im Freien von ca. 10 m, als auch ein Chip mit einer maximalen Leistung von 100mW, entsprechend einer Leistung von 20 dBm und einer Reichweite (im Freien) von ca. 100 m.

Einzelheiten eines Piconets, d.h. eines "Bluetooth"®-Netzwerks, werden in diesem Zusammenhang ebenfalls als bekannt vorausgesetzt, ebenso das Zeitmultiplexverfahren, mit dem ein (sogenannter) Master die Kommunikation in einem dynamischen Piconet steuert, das besonders im Einsatz im Bereich der erfindungsgemässen Serviceeinheit 1 in einem Restaurantbetrieb Verwendung findet.

Bei dem Standard "Bluetooth® V3.0" und mit dem Protokoll "Bluetooth® V4.0 Low Energy" ist zudem ein verbindungsloser Betrieb in Sende- und Empfangsrichtung möglich. Vorteilhaft ist auch, dass eine Verbindung von einem beliebigen Gerät ausgehen kann, das dann als Master gegenüber den antwortenden Einheiten, den sogenannten "Slaves" fungiert.

Es wird ebenso als in Fachkreisen bekannt vorausgesetzt, dass zu einem Verbindungsaufbau zwischen zwei "Bluetooth"®-Geräten "NFC" als zusätzliches RF-Protokoll genutzt werden kann. Auch dies wird vorliegend, d.h. in dieser Variante eines Ausführungsbeispiels verwendet und ist ansonsten im Rahmen der hier erläuterten Erfindung optional.

Mit dem auf diese Weise dem Restaurantbesucher zur Verfügung gestellten "Bluetooth"® hat er die Möglichkeit, über ein Headset Musik zu hören und/oder zu telefonieren.

Dabei soll anhand der Möglichkeit, über "Bluetooth" unter anderem auch Musik zu hören, ein grundsätzliches Prinzip dieser neuen Technologie erläutert werden, deren Gestaltungsmöglichkeiten und Serviceumfang für den Gast im wesentlichen darauf beruht, dass sich die erfindungsgemässe Serviceeinheit der derzeit noch neuen Dienste in der sogenannten "Cloud" bedienen kann.

Es muss auf diese Weise nicht mehr in einer CD-Sammlung, die ein Gast in einem Restaurant nicht parat hat, nach einem gewünschten Titel bzw. Werk gesucht werden, und es müssen nicht mehr die diversen Geräte eingeschaltet und die Lautstärke individuell geregelt werden.

Mit dem erfindungsgemäss grundsätzlich vorgesehenen WLAN-Netz, einem passenden App und einem Abonnement des Restaurantbetreibers für Musikdienste im Internet kann sich der Restaurantbesucher z.B. eine Liste aller Neuerscheinungen aus den verschiedensten Musikbereichen auf die Anzeigeeinheit der Serviceeinheit aufrufen, die dann in weniger als fünf Sekunden erscheint. Mit z.B. einem Fingertipp kann er dann das ausgewählte Musikstück via Headset anhören.

Diese Art des Musik-Streaming aus dem Netz und der Musikspeicherung in der Cloud offenbaren ein grundsätzliches Prinzip, dessen sich die vorliegende Erfindung bedient. Neben Musikwerken aller Art können genauso Gesundheitsdaten, Einzelheiten über Bestanteile des auszuwählenden Menüs und Vieles mehr über die "Cloud" oder auch Datenwolke abgespeichert und abrufbereit sein.

Gewünschte und benötigte Daten lösen sich von einem physikalischen Datenträger und bieten dadurch einen universellen Zugriff über die erfindungsgemässe Serviceeinheit.

Dabei bezeichnet "Streaming" den Medienempfang über das Netz und die gleichzeitige Wiedergabe. Der Inhalt muss vor der Wiedergabe nicht lokal gespeichert werden. Das gewünschte Medium wird in der Datenwolke des Internet bereitgehalten.

Damit ist am Beispiel der Musikwiedergabe ein übergreifendes Konzept der Datenspeicherung in der Wolke ("cloud") dargestellt, bei dem es nicht nur um Musik geht.

### Beispiel 2:

### I. Servicestation für eine elektronische Bewirtung in Form eines viereckigen Bierdeckels

Die erfindungsgemässe Servicestation gemäss diesem Ausführungsbeispiel ist in den Fig. der Zeichnung nicht noch einmal gesondert dargestellt. Sie unterscheidet sich von dem ersten Ausführungsbeispiel dadurch, dass sie im wesentlichen viereckig ausgebildet ist.

In diesem Fall sind zwei verschiedene Ausführungsvarianten zu unterscheiden. Gemäss einer Variante besteht die Serviceeinheit aus einem flachen, quadratisch ausgebildeten Gehäuse, einer Form, die im wesentlichen auch bei üblichen Bierdeckeln anzutreffen ist. Diese Formgebung hat wieder den Vorteil, dass sich die so gestaltete Serviceeinheit einer üblichen und gewohnten Ausstattung eines Restaurantbetriebes anpasst. Sie ist weder auffällig noch störend.

Andererseits besteht mit der Wahl der Gestaltung der erfindungsgemässen Servicestation auch die Möglichkeit, Akzente zu setzen, indem diese eine andere als die herkömmlich übliche Bierdeckelform aufweist. Zu diesen Formen gehören Rauten genauso wie unterschiedlichste Formen von Vielecken.

Diese Formgebungen finden hier insbesondere deshalb ausdrückliche Erwähnung, weil umfangreiche Tests und die Gestaltung von diversen Prototypen tatsächlich die Tatsache bestätigen konnte(n), dass diese erwähnten, vielfältigen Formen mit allen bisher in bezug auf das erste Ausführungsbeispiel erläuterten Varianten und technischen Gestaltungen praktisch umsetzbar sind.

Für den Fachmann ist ersichtlich, dass jegliche Formgebung der erfindungsgemässen Servicestation möglich ist. Sie ist lediglich so zu gestalten, dass alle notwendigen Bestandteile für ihren reibungslosen Betrieb in dem jeweiligen Gehäuse 3 untergebracht werden können.

Daher bezieht auch Beispiel 2 alle Ausführungsformen und Varianten, wie sie Beispiel 1 unter **I. - II.b.** nennt, ausdrücklich mit ein. Sie werden hier zur Vermeidung von Wiederholungen nicht noch einmal mit der geänderten Formgebung beschrieben und erläutert.

### Beispiel 3:

### I. Servicestation für eine elektronische Betreuung

Die weiter oben als elektronische Servicestation für die Bewirtung in Restaurantbetrieben oder Hotels erläuterte Vorrichtung kann ebenfalls mit Erfolg zur Betreuung von Patienten und älteren Menschen in einem Altenheim, einem Sanatorium, in einer betreuten Wohneinheit oder in einer Klinik eingesetzt werden.

Als solche der Betreuung von Menschen dienende Servicestation kann sie eine Form aufweisen, wie dies im Hinblick auf die mit der Bezugsziffer 1 bezeichnete Servicestation beschrieben worden ist und wie sie in den Fig. 1 und 2 exemplarisch gezeigt ist. Für die Zwecke einer näheren Erläuterung wird auf diese im wesentlichen scheibenförmig ausgebildete Servicestation 1 Bezug genommen.

Die Servicestation 1 besteht somit auch in diesem Ausführungsbeispiel aus einem flachen, rund ausgebildeten Gehäuse 3. Neben dieser runden Form sind ovale, quadratische und vieleckige Gestaltungen möglich. Sie sollten lediglich im Rahmen der Betreuung zweckdienlich sein.

In dem Gehäuse 3 befindet sich der Akku 5, wie ihn schon Fig. 2 zeigt, welcher die Stromversorgung gewährleistet, wie weiter oben beschrieben. Da auf diese Weise keine Kabelverbindung erforderlich ist, wird die zur Betreuung dienende Servicestation 1 besonders flexibel einsetzbar. Sie kann z.B. vom Betreuungspersonal oder der zu betreuenden Person innerhalb des Raumes oder der Räume mitgenommen werden. Es entfällt das Problem einer ausreichenden Länge eines solchen Kabels, und es wird für eine grössere Betriebssicherheit gesorgt. Die Unfallgefahr durch Stolpern über Kabel wird ausgeschlossen.

Die schon beschriebene "Wireless Power-Einheit" 7 in dem Gehäuse 3 sorgt für das kontaktlose und damit ebenfalls kabellose Aufladen des Akkus 5. Durch die Kommunikation mit anderen elektronischen Medien über WLAN wird die Serviceeinheit 1 von Kabelverbindungen vollständig unabhängig.

Die Servicestation 1 dieses Ausführungsbeispiels verfügt ebenso über einen in dem Gehäuse 3 untergebrachten Prozessor (CPU) 9 als zentrale Verarbeitungseinheit.

Für den genannten Verwendungszweck ist das Orten und Identifizieren der Servicestation 1 von sehr wesentlicher Bedeutung. Dazu dient wieder der RFID-Tag, bzw. Transponder, an der Unterseite des Gehäuses 3.

Neben der berührungslosen Identifizierung und Lokalisierung von Gegenständen bzw. Personen wird über die RFID-Technik auch die automatische Erfassung und Speicherung von Daten vorgenommen.

Mit der so konfigurierten Servicestation 1 kann die schnelle und effiziente Kommunikation und Interaktion in einem Pflegebetrieb oder im Rahmen eines betreuten Wohnens erfolgen. Der Patient oder Bewohner ist so nicht nur mit Betreuungspersonal, sondern ebenfalls mit der Küche der Pflegeeinheit im weitesten Sinn auf elektronische Weise verbunden. Er kann aus den angebotenen Speisen auswählen, sie gegebenenfalls auch für einen Tag oder für eine Mahlzeit abbestellen und/oder Getränke ordern. Über den RFID-Tag kann die Servicestation 1 eindeutig einem Zimmer, einer betreuten Wohneinheit zugeordnet werden. Der Patient oder Bewohner ist über die Servicestation 1 eindeutig und schnell lokalisierbar und erreichbar.

Die Kommunikation des Patienten oder Bewohners seinerseits mit dem Pflegepersonal oder der Küche geschieht über die Anzeigeeinheit 11 der Servicestation 1, wie sie Fig. 2 exemplarisch darstellt. Über diese Anzeigeeinheit 11 verschafft sich die Person die notwendigen Informationen über die Eingabemöglichkeiten und den Zustand der Eingabemöglichkeiten. Navigations- und Betätigungstasten 13 unterstützen den Patienten oder Bewohner dabei. Alternativ kann die Anzeigeeinheit 13 auch als Touchscreen ausgebildet sein, so dass sie durch Antippen reagiert.

Durch das integrierte WLAN-System kann der Patient oder Bewohner mit dem Menüprofilersystem und dem Internet kommunizieren. Über das Menüprofilersystem kann er nicht nur die von der Küche gerade bereitgestellten Speisen und Getränke auswählen, er kann zusätzlich ganz gezielt eine seinem Gesundheitszustand angemessene Zusammenstellung der Speise(n) wählen. So kann er beispielsweise als Diabetiker entsprechend den ihm zustehenden Broteinheiten auswählen. Diese werden ihm auf Wunsch mit entsprechender Auswahl auf seiner Anzeigeeinheit bzw. Bedienung des Touchscreens angezeigt. Ebenso können bei einer Diät die entsprechenden Joule oder Kalorien angezeigt werden oder es kann bei entsprechenden Krankheitsbildern der jeweilige Cholesterinwert abgefragt werden. Grundsätzlich ermöglicht wird dies über entsprechende Datenbanken, auf die zugegriffen werden kann.

Zusätzlich kann das medizinische Personal Einfluss nehmen auf die gewählten Speisen. So kann z.B. ein Bestellstopp möglich sein, wenn ein Diabetespatient Speisen und Getränke über die ihm zustehenden Broteinheiten hinaus verzehren möchte. Die Servicestation 1 ermöglicht dann auch elektronisch den Kontakt und die Beratung für alternative Speisen (und/oder Getränke).

Diese Darstellung der Möglichkeiten ist exemplarisch und kann beliebig an die Bedürfnisse einer Pflegeanstalt, Klinik, eines Sanatoriums oder betreuten Wohneinheit angepasst werden, indem von den vielfältigen Möglichkeiten der hier erläuterten Komponenten Gebrauch gemacht wird.

Durch den RFID-Tag kann jeweils eindeutig das Zimmer, der Wohnbereich mit dem oder den sich dort befindlichen, bestellenden oder handelnden Patienten/Bewohner zugeordnet werden.

Bei Auslieferung der gewünschten Speisen und Getränke ortet das jeweilige Personal den zu der Bestellung gehörenden Ort über den RFID-Tag und identifiziert auf diese Weise auch die Person, welcher die bestellten Speisen und Getränke zu bringen sind.

Bei Bedarf wird der sich für die konsumierten Speisen und Getränke ergebende Rechnungsbetrag automatisch in der Vorrichtung gespeichert, steht der jeweiligen bestellenden Person aktuell abrufbar zur Verfügung und ist gleichzeitig z.B. in einer für die Abrechnung zuständigen Abteilung gespeichert und abrufbar.

### II. Servicestation für eine elektronische Betreuung mit erweiterter Funktion

Grundlage für die gemäss diesem Ausführungsbeispiel zu erläuternde Servicestation 1 ist die im Ausführungsbeispiel **I.** beschriebene Servicestation 1. Insofern wird auf die Ausführungen in dem ersten Ausführungsbeispiel verwiesen. Gemäss diesem Ausführungsbeispiel wird die Servicestation 1 in ihren Servicemöglichkeiten gegenüber der betreuten Person dahingehend erweitert, dass diesem über die WLAN-Verbindung ein Internetzugang zur Verfügung steht. Dadurch kann im Rahmen der Betreuung ein Service zur Verfügung gestellt werden, der ganz besonders bei Personen mit eingeschränkter Beweglichkeit von grossem Nutzen ist.

Das Sanatorium, Pflegeheim, die Klinik oder die Leitung des betreuten Wohnbereichs hat gemäss dieser Variante einer Servicestation 1 ein beliebig erweiterbares Netzwerk zu externen Anbietern von Waren aufgebaut. Mit diesen Anbietern kann nun z.B. der Patient über das Internet kommunizieren und Waren zum sofortigen Einkauf bestellen. Diese werden dann zu einem vorherbestimmten Ort in dem Sanatorium, Pflegeheim, der Klinik oder des betreuten Wohnbereichs gebracht und für den Besteller geeignet deponiert.

Die externen Anbieter können Kaufhäuser aller Art sein, sofern diese in der Lage sind, eine elektronische Verbindung zu dem Sanatorium usw. zu ermöglichen, so dass grundsätzlich ein elektronisches Auswählen und Bestellen von Waren möglich ist.

Zur Absicherung der Interessen des jeweiligen Online-Anbieters von Waren kann der Besteller diese erst dann in Empfang nehmen, wenn sie bezahlt worden sind. Auch diese Information ist über die Servicestation 1 abrufbar.

Zur Bezahlung steht dem Besteller eine weitere Variante der Servicestation 1 in Form einer weiteren Ergänzung zur Verfügung.

### II.a. Servicestation für eine elektronische Bewirtung mit Zahlfunktion und erweiterten Dienstleistungen

Die weiter oben erläuterte Servicestation 1 kann gemäss dieser Modifikation der bisherigen Ausführungsbeispiele mit einem weiteren RFID-Tag in Kredit- bzw. Scheckkartenformat zur Bezahlung zusammenwirken. Dieser Vorgang ist an sich bereits als sogenanntes "E-PURSE" bekannt, so dass er selbst nicht näher erläutert werden muss.

Der Besteller in dem Sanatorium, Pflegeheim, der Klinik oder dem betreuten Wohnbereich kann nun grundsätzlich alle georderten Waren, Speisen oder Getränke, die z.B. nicht in seinem Betreuungsvertrag enthalten sind, mit dieser Karte bezahlen. Wenn die betreute Person z.B. über das Internet Waren geordert hat, die für sie an einem speziellen Ort des Hauses, z.B. in einem Ablegefach abgelegt worden sind, erhält sie diese erst, wenn sie diese mittels der genannten Zahlkarte bezahlt hat. Bis dahin bleiben sie in einem für die jeweilige Person eingerichteten Fach gesperrt. Auf diese Weise wird einem Missbrauch vorgebeugt.

Über diese Karte hat die Person aber auch die Möglichkeit, weitere Serviceangebote des betreuenden Hauses in Anspruch zunehmen. So kann sie über die Karte mit der dazugehörigen Personenidentifizierung eine Reservierung von therapeutischen und sonstigen Veranstaltungen vornehmen.

### II.b. Servicestation für eine elektronische Betreuung mit zusätzlichen Dienstleistungen

Für die gemäss diesem Ausführungsbeispiel zu erläuternde Variante der Serviceeinheit 1 wird wieder Bezug genommen auf die im Ausführungsbeispiel **I.** beschriebene Servicestation 1 in Form eines Bierdeckels. Insofern kann auch hier auf die Ausführungen in dem ersten Ausführungsbeispiel verwiesen werden. Zusätzlich zu den nachfolgend noch erläuterten Funktionen dieser Variante kann die Servicestation 1 genauso die erweiterten Servicemöglichkeiten gegenüber der betreuten Person aufweisen, wie sie in dem Ausführungsbeispiel **II.a.** in bezug auf den durch die WLAN-Verbindung ermöglichten Internetzugang erläutert worden sind. Für die besonderen Servicemöglichkeiten, welche dadurch der betreuten Person zur Verfügung gestellt werden können, wird auf die Ausführungen unter **II.a.** verwiesen. Hier soll nur die davon grundsätzlich unabhängige zusätzliche Dienstleistung dieser Variante **II.b.** erläutert werden.

Diese zusätzliche Dienstleistung betrifft optionale Erweiterungen, welche sich grundsätzlich durch den Betrieb und das Zur-Verfügung-Stellen von "Bluetooth" (Marke der Bluetooth Special Interset Group (SiG)) ergeben. Dabei werden die Grundlagen der auf diese Weise bezeichneten verbindungslosen Datenübertragung **II.b.** verwiesen, die hier ebenso Gültigkeit haben.

Bei Testversionen der Servicestation 1 im bereich des betreuten Wohnens und im Sanatoriumsbereich wurden sowohl ein Chip eingesetzt, der eine maximale Leistung von 2,5 mW ermöglichte, welche einer maximalen Leistung von 4dBm entspricht, mit einer Reichweite im Freien von ca. 10 m, als auch ein Chip mit einer maximalen Leistung von 100mW, entsprechend einer Leistung von 20 dBm und einer Reichweite (im Freien) von ca. 100 m.

Einzelheiten eines Piconets, d.h. eines "Bluetooth"-Netzwerks, werden in diesem Zusammenhang ebenfalls als bekannt vorausgesetzt, ebenso das Zeitmultiplexverfahren, mit dem ein (sogenannter) Master die Kommunikation in einem dynamischen Piconet steuert, das bei dem Einsatz der erfindungsgemässen Servicestation 1 in einem Sanatorium, Pflegeheim, einer Klinik oder im Bereich des betreuten Wohnbereichs Restaurantbetrieb sehr geeignet Verwendung finden kann.

Mit dem auf diese Weise der betreuten Person zur Verfügung gestellten "Bluetooth" hat diese die Möglichkeit, über ein Headset Musik zu hören und/oder zu telefonieren.

Dabei kann als besonders vorteilhaft für die Gestaltungsmöglichkeiten und den Serviceumfang der "Bluetooth"®-Technologie, unter anderem bei der Möglichkeit, Musik zu hören, auf die Dienste in der sogenannten "Cloud" hingewiesen werden, denen sich die betreute Person dabei bedienen kann.

Besonders für Menschen, die ihre Wohnung, ihr Haus alters- oder krankheitshalber vorübergehend oder ganz verlassen mussten, ist es ein besonderer Vorzug, nun nicht mehr auf z.B. ihre eine CD-Sammlung zurückgreifen zu müssen, um gewohnte oder gewünschte Musiktitel und -werke hören zu können. Es müssen nicht mehr die verschiedensten Geräte eingeschaltet werden, was insbesondere bei einer Gehbehinderung zu einer erheblichen Verbesserung der Lebensqualität führt. Nur ausgerüstet mit dem WLAN-Netz, einem passenden App und einem Abonnement des Sanatoriums oder sonstigen Hauses, in welchem sich die Person befindet, für Musikdienste im Internet können Neuerscheinungen aus den verschiedensten Musikbereichen auf der Anzeigeeinheit der Servicestation aufrufen werden und erscheinen in weniger als fünf Sekunden auf dem Display. Mit beispielsweise nur einem Fingertipp kann dann ein Musikstück ausgewählt und über Headset in der gewünschten Lautstärke angehört werden, ohne z.B. bei Schwerhörigkeit Dritte zu stören.

Auf diese Weise können neben Musikwerken aller Art können genauso Gesundheitsdaten und sonstige, gewünschte Einzelheiten über die "Cloud" oder auch Datenwolke abgespeichert und abrufbereit sein.

Die Daten lösen sich somit von einem physikalischen Datenträger und bieten einen universellen Zugriff über die Servicestation.

Auf den Begriff des "Streaming" wurde weiter oben schon verwiesen. Das jeweils gewünschte Medium wird in der Datenwolke des Internet bereitgehalten.

Abschliessend wird noch eine zusätzliche Ausgestaltung der erfindungsgemässen Servicestation (1) erläutert, die allen bisher beschriebenen Ausführungsformen und Varianten gemeinsam ist, welche jedoch eher den Zweck eines erhöhten Bedienungskomforts erfüllt. Dieser zusätzliche Bedienungskomfort wird dadurch erreicht, dass über eine Zustandsanzeige 15 mit mehrfarbenen LEDs schnell ein Überblick über den jeweiligen Status der Servicestation 1 ermöglicht wird. Dies ist in Fig. 2 anhand der Schaltsymbole der Zustandsanzeige 15 für die LEDs veranschaulicht. Dabei sind die mehrfarbenen LEDs nicht nur aus ästhetischen Gründen so gewählt. Vielmehr wird dadurch ein visuell schnelleres Überprüfen des abzufragenden Status gewährleistet. Auf weitere Erläuterungen und eine Beschreibung in Schriftform kann auf diese Weise verzichtet werden, was den Bedienungskomfort für den Gast oder die zu betreuende Person erhöht.

## Patentansprüche

1. Servicestation für eine elektronische Bewirtung und/oder Betreuung, mit einem Gehäuse (3), welches ein integriertes CPU-System (9) für die Steuerung der Servicestation (1) aufweist und mit einem RFID-Lesegerät ausgestattet ist, für die Erkennung von Komponenten in der Umgebung der Servicestation (1), sowie mit einem RFID-Transponder, für die Identifizierung der Servicestation (1) selbst, wobei die Servicestation (1) ein WLAN aufweist, für die elektronische Kommunikation mit der Umgebung, einschliesslich des Internets, so dass sie kabellos ist, und über Navigations- und/oder Betätigungstasten verfügt, für den Einsatz der Servicestation (1) im Rahmen der elektronischen Bewirtung und/oder Betreuung, sowie einer Anzeigeeinheit (11), wobei die Servicestation (1) mit einer elektronischen Menükarte und/oder sonstigen Daten und Informationen als weiteren Komponenten in der Umgebung über WLAN verbindbar oder verbunden ist.

2. Servicestation für eine elektronische Bewirtung und/oder Betreuung nach Anspruch 1, **dadurch gekennzeichnet, dass** in die Servicestation (1) ein Akku (5) für ihren Betrieb integriert ist.

3. Servicestation für eine elektronische Bewirtung und/oder Betreuung nach Anspruch 2, **gekennzeichnet durch** eine drahtlose Aufladung des Akkus über eine Wireless Power-Einheit (7).

4. Servicestation für eine elektronische Bewirtung und/oder Betreuung nach einem der Ansprüche 1 bis 3, **dadurch gekennzeichnet, dass** sie eine Zustandsanzeige mit vorzugsweise mehrfarbigen LFDs (15) aufweist.

5. Servicestation für eine elektronische Bewirtung und/oder Betreuung nach einem der Ansprüche 1 bis 4, **dadurch gekennzeichnet, dass** das Gehäuse (3) in runder, ovaler, viereckiger oder vieleckiger Form ausgebildet ist und Navigation- und Betätigungstasten (13) aufweist.

6. Servicestation für eine elektronische Bewirtung und/oder Betreuung nach einem der Ansprüche 1 bis 5, **dadurch gekennzeichnet, dass** sie einen Chip für die verbindungslose Datenübertragung mittels "Bluetooth"® aufweist, vorzugsweise den Standard "Bluetooth V3.0" ® oder das Protokoll "Bluetooth V4.0 Low Energy"®.

7. Servicestation für eine elektronische Bewirtung und/oder Betreuung nach einem der Ansprüche 1 bis 6, **dadurch gekennzeichnet, dass** sie mit einem RFID-Transponder für die geldlose Bezahlung korrespondiert, wobei der RFID-Transponder für die geldlose Bezahlung vorzugsweise in Form einer Kreditkarte ausgebildet ist.

8. Verwendung der Servicestation nach einem der Ansprüche 1 bis 7 zur Bewirtung von Gästen in einem Restaurant oder in einem Hotel.

9. Verwendung der Servicestation nach einem der Ansprüche 1 bis 7 zur Betreuung von Patienten und älteren Menschen in einem Attenheim, einem Sanatorium, in einer betreuten Wohneinheit oder in einer Klinik.

10. Verfahren zur elektronischen Bewirtung und/oder Betreuung von Personen, bei dem die Person durch die Vermittlung über einen Host über eine mittels eines RFID-Transponders identifizierbare Servicestation (1) in Form eines Gehäuses (3), welches ausserdem über ein RFID-Lesegerät Komponenten in der Umgebung der Servicestation (1) erkennt, über ein WLAN in eine elektronische Kommunikation mit der Umgebung, einschliesslich des Internets und/oder eines Menüprofilersystems, tritt, und über eine Anzeigeeinheit (11) sowie Navigations- und/oder Betätigungstasten (13) eine elektronische Bestellung aufgibt und/oder einen Auftrag erteilt, wobei die Servicestation (1) alle sich aus der Interaktion der Person ergebenden Daten und Informationen speichert oder an eine Speichereinheit sendet und für die Person einsehbar und verfügbar macht.

11. Verfahren zur elektronischen Bewirtung und/oder Betreuung von Personen nach Anspruch 10, **dadurch gekennzeichnet, dass** die Person über die WLAN-Verbindung auf das Internet zugreift, dass mit dem die Servicestation (1) zur Verfügung stellenden Host dritte Anbieter verbunden sind, und dass die Person die Dienstleistungen der dritten Anbieter über eine elektronische Kommunikation in Anspruch nimmt, wobei alle für das Internetgeschäft erforderlichen Informationen über die Servicestation (1) verfügbar gemacht werden.

12. Verfahren zur elektronischen Bewirtung und/oder Betreuung von Personen, nach Anspruch 10 oder 11, **dadurch gekennzeichnet, dass** der Person zusätzlich zu der Servicestation (1) eine Zahlkarte zur Verfügung steht, die über einen RFID-Tag identifiziert wird und dass die Person bestellte Waren und/oder Dienstleistungen damit bezahlt, wobei die Servicestation (1) über eine Zustandsanzeige die erfolgte Zahlung bestätigt.

13. Verfahren zur elektronischen Bewirtung und/oder Betreuung von Personen, nach einem der Ansprüche 10 bis 12, **dadurch gekennzeichnet, dass** die Servicestation (1) mit einem Ablagefach zusammenwirkt, dass das Ablagefach elektronisch gesperrt wird, und dass die Freigabe nach einer elektronischen Zahlung von bestellten und bezahlten Waren über ein elektronisches Signal erfolgt,

14. Verfahren zur elektronischen Bewirtung und/oder Betreuung von Personen, nach einem der Ansprüche 10 bis 13, **dadurch gekennzeichnet, dass** die Servicestation (1) mit einer Bluetooth ®-Version zusammenwirkt und diese zur Verfügung stellt, und dass die Person über Bluetooth® Musik hört und/oder telefoniert.

15. Verfahren zur elektronischen Bewirtung und/oder Betreuung von Personen, nach einem der Ansprüche 10 bis 14, **dadurch gekennzeichnet, dass** die Servicestation (1) die über sie erreichbaren Informationen und Daten durch Streaming aus der Datenwolke des Internet bereitstellt.
